# EUROPÄISCHE PATENTSCHRIFT

(11) **EP 0 793 035 B1**
(45) Veröffentlichungstag und Bekanntmachung des Hinweises auf die Patenterteilung: **12.09.2001**
(21) Anmeldenummer: 97101777.7
(22) Anmeldetag: 05.02.1997
(51) Int. Cl.: F16F 7/12, B60R 19/34

(54) **Energieabsorptionskörper**
Energy absorbing body
Corps d'absorption d'énergie

(30) Priorität: 02.03.1996 DE 19608100
(43) Veröffentlichungstag der Anmeldung: 03.09.1997
(73) Patentinhaber: Volkswagen Aktiengesellschaft, 38436 Wolfsburg (DE)
(72) Erfinder: Lange, Wolfgang, Dipl.-Ing., 38448 Wolfsburg (DE); Preu, Michael, 54310 Ralingen-Godendorf (DE); Bosse, Rüdiger, Dipl.-Ing., 38524 Sassenburg (DE)

(56) Entgegenhaltungen:
- DE-A- 2 427 764
- DE-A- 19 537 186
- US-A- 4 272 114

## Beschreibung

Die Erfindung betrifft einen Energieabsorptionskörper nach dem Oberbegriff des Anspruchs 1.

Energieabsorptionskörper als Prallelemente sind in vielfältigen Ausführungen bekannt geworden. So zeigen beispielsweise die DE-24 27 764-A1, DE-89 07 385-U1 und DE-42 39 460-A1 1 als Hohlkörper ausgeführte Prallelemente, die zwischen einem Stoßfängerträger und einem Längsträgerende eines Kraftfahrzeuges angeordnet sind. Diese Prallelemente sind so ausgestaltet, daß bei geringen Stoßbelastungen nur diese selbst, nicht aber das dahinterliegende Längsträgerteil Formveränderungen unterworfen wird. Somit kann nach Bagatellunfällen mit geringen Stoßbelastungen durch einfachen Austausch der beschädigten Prallelemente das Fahrzeug mit geringem Reparaturaufwand wieder Instand gesetzt werden.

In einer weiter bekannten Ausführung nach der DE-195 37 186-A1 ist ein Pralltopfelement kastenförmig ausgebildet und mit seinem Topfboden mit dem Längsträgerende als dessen Verlängerung verschraubt. An der offenen Seite des Pralltopfelements ist ein umlaufender Flansch angeformt, an den ein Stoßfängerträger angeschraubt ist. Das Pralltopfelement ist hier pyramidenstumpf- oder kegelstumpfartig ausgebildet, wobei die kleinere Stirnfläche am Längsträgerteil und die größere Stirnfläche am Stoßfängerträger liegt.

In einer ähnlichen Anordnung nach der DE 44 01 865 A1 ist das Prallelement als mechanisches Deformationselement zur Einleitung eines vorbestimmten Knickvorgangs mit Quersicken versehen. Zudem sind zur Erhöhung der Steiffigkeit auch längsverlaufende Versteifungssicken angebracht.

Solche Pralltopfelemente können unmittelbar mit Längsträgerenden verbunden werden. Bei einem anderen, allgemein bekannten Aufbau wird beispielsweise am vorderen Längsträgerende ein weiteres Bauteil als Längsträgerendstück eingesteckt und vorzugsweise einge schweißt. Dieses Längsträgerendstück ist durch eine vordere Schottwand verschlossen. Mit der Schottwand ist über eine Zentralverschraubung ein Pralltopfelement und anschließend ein Stoßfängerquerträger verbunden.

Bei einem Bagatelltunfall mit geringer Stoßbelastung kann hier einfach und kostengünstig das verformte Pralltopfelement über die Zentralverschraubung ausgetauscht werden. Das Längsträgerendstück hat hierbei im wesentlichen die gleichen Deformationseigenschaften wie der angeschlossene Längsträger, so daß bei einem Überschreiten der Energieaufnahme durch das Pralltopfelement die nachfolgende Einheit aus Längsträgerendstück und Längsträger verformt wird.

Alle vorstehend beschriebenen Prallelemente sowie das beschriebene Längsträgerendstück sind einstückige oder mehrteilige Tiefziehteile. Die Dimensionierungsmöglichkeiten hinsichtlich des Energieabsorptionsvermögens, der Steifigkeit sowie des Beul- und Knickverhaltens sind durch diese Herstellung beschränkt. Dadurch ist eine geeignete Deformationsstruktur im Längsträgerendbereich aufwendig und mit relativ großem Materialeinsatz verbunden.

Weiterhin ist aus der US 4,272,114 A ein Energieabsorptionskörper der eingangs genannten Art bekannt. Bei diesem sind die beiden Anschlußquerschnitte jeweils an den Übergangsabschnitt angeschweißt.

Aufgabe der Erfindung ist es, einen Energieabsorptionskörper so weiterzubilden, daß er als Pralltopfelement und/oder Längsträgerendstück mit hohem Energieabsorptionsvermögen bei vergleichsweise geringem Materialeinsatz verwendbar ist.

Diese Aufgabe wird durch einen Energieabsorptionskörper mit den Merkmalen des Anspruchs 1 gelöst.

Bei der an sich bekannten Innenhochdruckumformung werden geschlossene oder verschließbare Profilteile, insbesondere Stahlrohrabschnitte verformt. Dazu wird das zu verformende Halbzeug in ein Werkzeug eingelegt und mit seinen Wänden durch Aufbringen eines hohen Innendruckes gegen die umgebende Werkzeugform gepreßt und entsprechend deren Gestalt umgeformt. Im sogenannten Hydroforming wird der hohe Innendruck hydraulisch aufgebracht.

Zur Herstellung des erfindungsgemäßen Energieabsorptionskörpers kann als umzuformendes Halbzeug ein einfacher Rohrabschnitt eines zylindrischen oder prismatischen Rohres verwendet werden. Dieser Rohrabschnitt wird somit zur Herstellung eines Energieabsorptionskörpers einfach aufgeblasen und geweitet. Dieses Innenhochdruckverfahren ist mittlerweile sicher beherrschbar und preiswert durchzuführen.

Die nach dem Innenhochdruckverfahren hergestellten Energieabsorptionskörper weisen eine gute Maßhaltigkeit auf. Durch dieses Herstellungsverfahren sind nahezu beliebige Geometrien und Formen für unterschiedliche Anforderungen und Gegebenheiten möglich. Insbesondere sind mit unterschiedlichen Querschnitten und Materialstärken Anpassungen an unterschiedliche Belastungen sowie Einstellungen eines bestimmten Beul- und Knickverhaltens möglich. Bei entsprechenden Dimensionierungen kann somit ein hohes Energieabsorptionsvermögen bei vergleichsweise geringem Materialeinsatz erhalten werden.

Ein erfindungsgemäßer Energieabsorptionskörper kann an einem frontseitigen oder heckseitigen Längsträgerende verwendet werden. Der Energieabsorptionskörper kann als Längsträgerendstück und somit als integraler Bestandteil des Karosserieaufbaus eingesetzt werden. Dabei kann ggf. bei entsprechender Dimensionierung ein zusätzlicher, herkömmlicher Pralltopf entfallen, so daß hier das Längsträgerendstück als Pralltopfelement wirkt. Dabei kann der Energieabsorptionskörper in das freie Längsträgerende eingesteckt und vorzugsweise eingeschweißt sein. Wenn nach einem Bagatellunfall lediglich das Längsträgerendstück in der gewollten Weise verformt wird, ist bei unverformtem Längsträger eine Reparatur einfach möglich. Dazu wird das Längsträgerendstück vor dem Längsträgerende mit einer Trennscheibe abgetrennt, wobei der eingeschweißte Teil des Längsträgerendstücks im Längsträger verbleibt. Es wird anschließend ein neues Längsträgerendstück mit entsprechend kleinerem Querschnitt wieder in den freien Längsträgerendbereich eingesetzt und verschweigt. Ein solches Längsträgerendstück zu Reparaturzwecken mit entsprechend kleinerem Querschnitt kann ebenfalls durch eine Innenhochdruckumformung hergestellt werden und in Ersatzteillagern vorgehalten werden.

In der vorstehend beschriebenen Ausführung ist der Energieabsorptionskörper als alleiniges, integrales Pralltopfelement verwendet. Es ist jedoch entsprechend der bisherigen Anordnungen möglich, vor dem Energieabsorptionskörper einen herkömmlichen Pralltopf anzuordnen. Zweckmäßig erfolgt dann eine gestufte Aufnahme von Deformationsenergie, wobei sich bei geringer Stoßbelastung als erstes der Pralltopf verformt und anschließend bei größerer Stoßbeiastung das erfindungsgemäß ausgeführte Längsträgerendstück.

Der erfindungsgemäße Energieabsorptionskörper kann aber auch bei der vorbeschriebenen, bekannten Anordnung an Stelle eines herkömmlichen Pralltopfs eingesetzt werden, d. h. gegebenenfalls in Verbindung mit einem herkömmlichen Längsträgerendstück.

Obwohl die Innenhochdruckumformung einen großen Freiraum in der Formgestaltung des Energieabsorptionskörpers offenläßt, hat sich für eine günstige Herstellung eine Ausführung als rohrförmiger, beidseitig offener und etwa koaxial zum Längsträger ausgerichteter Hohlkörper als gut geeignet erwiesen, wobei die Anschlußquerschnitte jeweils an den beiden endseitigen Rohröffnungen liegen. Damit kann beispielsweise der erste Anschlußquerschnitt für den Längsträger in an sich bekannter Weise dort eingesteckt und beispielsweise durch Schweißen oder Verkleben verbunden werden.

Ein besonders gutes Beul- und Energieaufnahmeverhalten wird erreicht, wenn der erste Anschlußquerschnitt zum Längsträger größer ist als der zweite Anschlußquerschnitt zum Stoßfängerträger Eine zusätzliche Verbesserung wird erreicht, wenn beide Anschlußquerschnitte als Vielecke mit unterschiedlicher Eckenzahl ausgeführt sind, wobei bevorzugt die Eckenzahl am zweiten Anschlußquerschnitt zum Stoßfängerträger größer ist. Die Bereiche in den Ecken sind dabei nicht scharfkantig sondern zweckmäßig gerundet. Solche Abrundungen erleichtern die Herstellung beim Innenhochdruckverfahren und führen zudem zu einer guten Einleitung eines Beulvorgangs mit Energieverzehr.

Eine bevorzugte Ausführung weist einen viereckigen Anschlußquerschnitt als Rechteck oder Raute für den Längsträger und einen sechseckigen Anschlußquerschnitt für den Stoßfängerträger auf. Die Sechsecke führen zu einer hohen Energieaufnahme. Prinzipiell ist festzustellen, daß mehr Ecken mehr Verformungsenergie benötigen.

Im Gegensatz zum Tiefziehverfahren kann bei der Innenhochdruckverformung auf einfache Art eine relativ große Variation in den Wandstärken durchgeführt werden. Dies kann hier vorteilhaft zur Dimensionierung und Einstellung eines bestimmten Kraftniveaus und eines vorbestimmten Beul- und/oder Knickverhaltens eingesetzt werden. Dazu hat sich eine Variation der Wandstärke über die Länge als vorteilhaft erwiesen, wobei gute Ergebnisse mit kleineren Wandstärken im Anschlußquerschnittsbereich für den Längsträger und dickere Wandstärken im Bereich des Anschlußquerschnitts für den Stoßfängerträger mit entsprechenden Übergangsabschnitten verwendet werden.

Zur Versteifung sind mit dem Innenhochdruckverfahren einfach auch an sich bekannte Längssicken einformbar.

Weiter sind mit dem Innenhochdruckverfahren einfach Anschlußflansche realisierbar. Als Schweiß- oder Schraubflansche können diese ein- oder beidseitig am freien Ende eines Anschlußquerschnittes liegen. Es sind auch zusätzliche Flansche möglich für die Befe*stigung weiterer Anschlußelemente.*

Anhand einer Zeichnung werden Ausführungsbeispiele der Erfindung näher erläutert.

Es zeigen:
- Fig. 1: eine perspektivische Ansicht eines Energieabsorptionskörpers,
- Fig. 2: eine Ansicht des Energieabsorptionskörpers nach Fig. 1 in Achsrichtung, und
- Fig. 3: eine perspektivische Ansicht einer zweiten Ausführung eines Energieabsorptionskörpers.

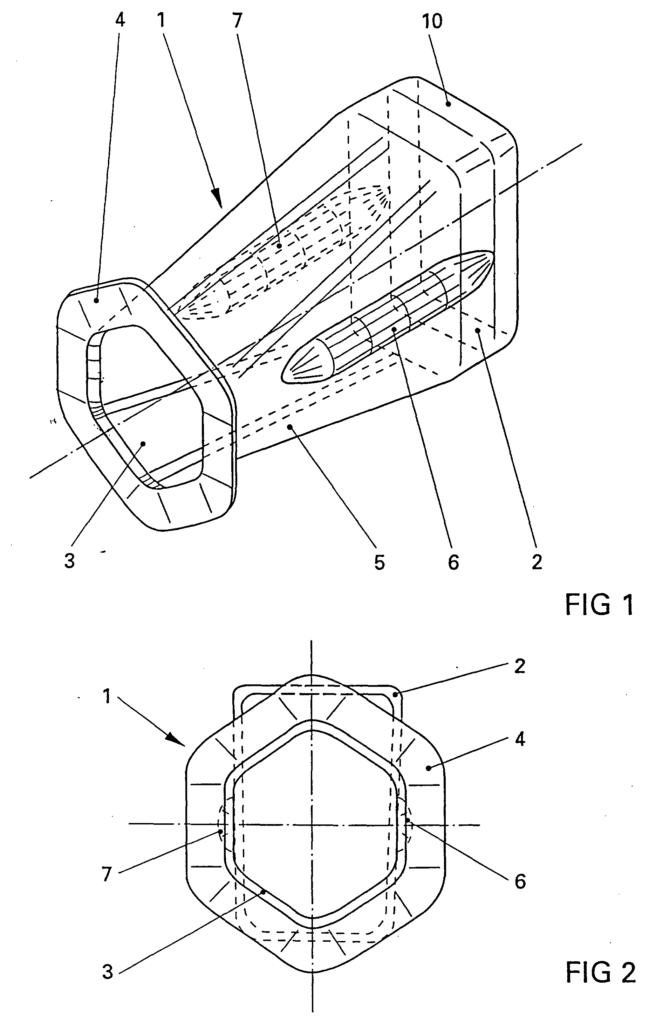

In Fig. 1 ist ein rohrförmiger Energieabsorptionskörper 1 dargestellt, der aus einem Stahlrohrabschnitt durch eine Innenhochdruckumformung hergestellt ist.

Der Energieabsorptionskörper weist einen ersten Anschlußquerschnitt für einen Längsträger eines Kraftfahrzeugaufbaus auf. Dieser Anschlußquerschnitt ist, wie insbesondere aus Fig. 2 ersichtlich, viereckig mit einer leichten Rautenausbildung ausgeführt und dem Querschnitt am freien Ende eines (nicht dargestellten) Längsträgers zugeordnet. Für eine Verbindung kann in an sich bekannter Weise der Anschlußquerschnitt 2 formschlüssig in ein Längsträgerende eingesteckt oder darübergesteckt und durch Verschweißen oder Verkleben befestigt werden. Dadurch ist der Energieabsorptionskörper 1 koaxial als Verlängerung des Längsträgers ausgerichtet.

Gegenüberliegend zum ersten Anschlußquerschnitt 2 liegt ein zweiter Anschlußquerschnitt 3 für einen (nicht dargestellten) Stoßfängerträger. Dieser zweite Anschlußquerschnitt 3 ist als Sechseck mit etwa gleich langen Seiten ausgebildet, wie in Fig. 2 deutlich zu erkennen. Stirnseitig am zweiten Anschlußquerschnitt 3 ist ein umlaufender Anschlußflansch 4 angeformt, über den durch Verschweißen oder Verkleben und/oder Verschrauben die Verbindung zum Stoßfängerträger herstellbar ist.

Der erste Anschlußquerschnitt 2 hat insgesamt einen größeren Durchmesser als der zweite Anschlußquerschnitt 3.

Zwischen den Anschlußquerschnitten 2 und 3 liegt ein längerer Übergangsabschnitt 5, in dem die unterschiedlichen Geometrien derAnschlußquerschnitte ineinander übergeführt werden. In diesem Übergangsquerschnitt 5 sind zudem zwei gegenüberliegende, ausgewölbte Längssicken 6, 7 eingeformt.

Die Kanten an den Anschlußquerschnitten 2 und 3 sowie im Übergangsabschnitt 5 sind abgerundet. Am stimseitigen Bereich des ersten Anschlußquerschnitts 2 ist zudem eine Einführschräge 10 angeformt, um das formschlüssige Einstecken in ein freies Längsträgerende zu vereinfachen.

Für eine gute formschlüssige Halterung hat der erste Anschlußquerschnitt 2 eine geeignete Längserstreckung, an die sich der Übergangsquerschnitt 5 anschließt.

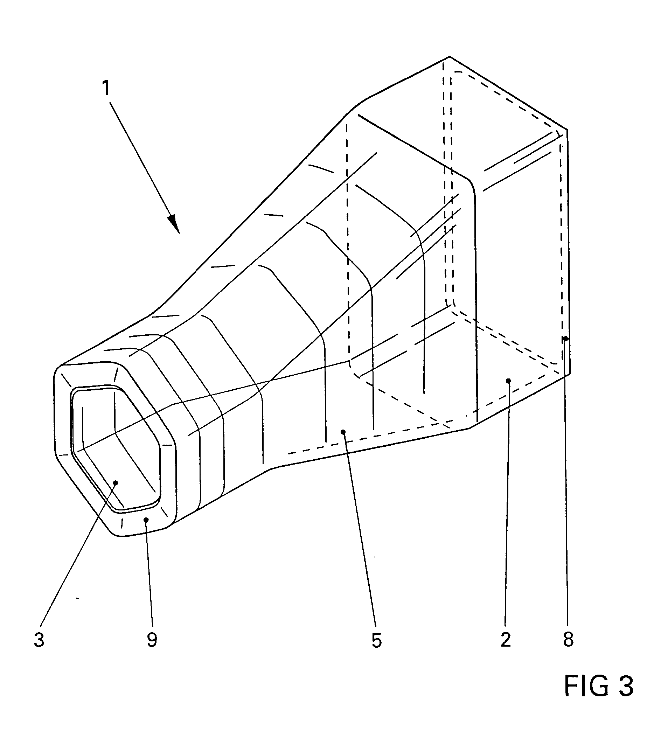

In Fig. 3 ist eine ähnliche zweite Ausführungsform dargestellt, bei der gleiche Elemente mit den gleichen Bezugszeichen angegeben sind.

Der erste Anschlußquerschnitt 2 hat auch hier eine gewisse Längserstreckung für eine formschlüssige Verbindung, wobei aber keine Einführschräge vorgesehen ist. Zudem weist auch der zweite Anschlußquerschnitt eine gewisse Längserstreckung auf. Die Verbindung zu einem (nicht dargestellten) Stoßfängerträger erfolgt hier ohne angeformten Flansch mit einer formschlüssigen Aufsteck- oder Einsteckverbindung ähnlich wie am ersten Anschlußquerschnitt 2.

Zwischen den Längsbereichen mit gleichbleibendem ersten und zweiten Anschlußquerschnitt 2 und 3 erstreckt sich auch hier ein längerer Übergangsabschnitt 5 ohne Längssicken.

Die Wandstärke des Energieabsorptionskörpers variiert über die Länge von einer relativ dünnen Wandstärke 8 im Bereich des ersten Anschlußquerschnitts 2 zu einer dickeren Wandstärke 9 im Bereich des zweiten Anschlußquerschnitts 3.

Beide beschriebene Ausführungsformen von Energieabsorptionskörpern 1 sind somit Hohlkörper, die durch ein Innenhochdruckumformverfahren in die Endform gebracht sind mit einem von einem sechseckigen in einen im wesentlichen rechteckigen übergehenden Quer schnitt. In der zweiten Ausführungsform variiert über die Länge zudem die Wanddicke, wobei diese Wanddickenänderung auch bei der ersten Ausführungsform verwendbar ist. Damit liegen Energieabsorptionskörper als Längsträger-Anpaßstücke vor, für eine Anbindung zwischen Längsträger und Stoßfängerträger mit definierter Krafteinleitung und gezieltem Deformationsverhalten bei einem Aufprall.

Die Auswertung unterschiedlicher Geometrievarianten im Hinblick auf eine massenspezifische Energieaufnahme hat eine wesentliche Verbesserung bei den dargestellten Ausführungen ergeben. Typische Werte für die massenspezifische Energieaufnahme (kJ/kg) bei herkömmlichen Anordnungen liegen bei 7,5 während unter vergleichbaren Verhältnissen die Werte für die erfindungsgemäßen Energieabsorptionskörper bei ca. 12,4 liegen. Somit wird hier ein angestrebtes, hohes Energieabsorptionsvermögen bei vergleichsweise geringem Materialeinsatz erzielt.

## Patentansprüche

1. Energieabsorptionskörper, der zwischen einem Stoßfängerträger und einem Längsträgerendbereich eines Fahrzeugrahmens gehalten ist, wobei der Energieabsorptionskörper (1) im Endbereich eines Längsträgers in der Art eines Pralltopfelements hohlkörperförmig und mit einem sich über die Längserstreckung verändernden Querschnitt ausgebildet ist und einen ersten Anschlußquerschnitt (2) für den Längsträger, einen zweiten Anschlußquerschnitt (3) für den Stoßfängerträger sowie einen Übergangsabschnitt (5) zwischen den beiden Anschlußquerschnitten (2, 3) aufweist, **dadurch gekennzeichnet, daß** der Energieabsorptionskörper (1) ein Innenhochdruckteil ist, dessen Form durch eine Innenhochdruckumformung eines Halbzeugs hergestellt ist.

2. Energieabsorptionskörper nach Anspruch 1, **dadurch gekennzeichnet, daß** der Energieabsorptionskörper (1) als rohrförmiger, beidseitig offener und etwa koaxial zum Längsträger ausgerichteter Hohlkörper ausgebildet ist mit den Anschlußquerschnitten (2, 3) an den beiden endseitigen Rohröffnungen.

3. Energieabsorptionskörper nach Anspruch 1 oder Anspruch 2, **dadurch gekennzeichnet, daß** der erste Anschlußquerschnitt (2) für den Längsträger größer ist als der zweite Anschlußquerschnitt (3) für den Stoßfängerträger.

4. Energieabsorptionskörper nach einem der Ansprüche 1 bis 3, **dadurch gekennzeichnet, daß** beide Anschlußquerschnitte (2, 3) Vielecke sind mit jeweils unterschiedlicher Eckenzahl.

5. Energieabsorptionskörper nach Anspruch 4, **dadurch gekennzeichnet, daß** der erste Anschlußquerschnitt (2) für den Längsträger ein Viereck als Rechteck oder Raute darstellt und der zweite Anschlußquerschnitt (3) für den Stoßfängerträger ein Sechseck ist.

6. Energieabsorptionskörper nach einem der Ansprüche 1 bis 5, **dadurch gekennzeichnet, daß** die Wandstärken (8, 9) zur Einstellung bestimmten Kraftniveaus und eines vorbestimmten Beul- und/oder Knickverhaltens über die Länge variieren.

7. Energieabsorptionskörper nach Anspruch 6, **dadurch gekennzeichnet, daß** die Wandstärken (8) im Bereich des ersten Anschlußquerschnitts (2) für den Längsträger dünner sind und zu dickeren Wandstärken (9) im Bereich des zweiten Anschlußquerschnitts (3) für den Stoßfängerträger übergehen.

8. Energieabsorptionskörper nach einem der Ansprüche 1 bis 7, **dadurch gekennzeichnet, daß** Längssicken (6, 7) eingeformt sind.

9. Energieabsorptionskörper nach einem der Ansprüche 1 bis 8, **dadurch gekennzeichnet, daß** wenigstens ein Flansch (4) zumindest im Bereich eines Anschlußquerschnitts (2, 3) angeformt ist.

## Claims

1. Energy-absorbing body which is held between a bumper support and an end region of a longitudinal spar of a vehicle frame, wherein the energy-absorbing body (1) is formed as a hollow body in the end region of a longitudinal spar in the manner of a cup-shaped impact element and with a cross-section changing over the longitudinal extension, and comprises a first connection cross-section (2) for the longitudinal spar, a second connection cross-section (3) for the bumper support and a transitional portion (5) between the two connection cross-sections (2, 3), **characterised in that** the energy-absorbing body (1) is an internal high pressure part, the shape of which is produced by an internal high pressure deformation of a semi-finished product.

2. Energy-absorbing body according to claim 1, **characterised in that** the energy-absorbing body (1) is formed as a tubular hollow body which is open at both ends and is aligned approximately coaxial to the longitudinal spar, having the connection cross-sections (2, 3) at the two end-face tube openings.

3. Energy-absorbing body according to claim 1 or claim 2, **characterised in that** the first connection cross-section (2) for the longitudinal spar is larger than the second connection cross-section (3) for the bumper support.

4. Energy-absorbing body according to any one of claims 1 to 3, **characterised in that** both connection cross-sections (2, 3) are polygons, each with a different number of comers.

5. Energy-absorbing body according to claim 4, **characterised in that** as a rectangle or rhombus the first connection cross-section (2) for the longitudinal spar constitutes a quadrilateral and the second connection cross-section (3) for the bumper support is a hexagon.

6. Energy-absorbing body according to any one of claims 1 to 5, **characterised in that** the wall thicknesses (8, 9) vary over their length in order to set specific force levels and a predetermined bulging or buckling behaviour.

7. Energy-absorbing body according to claim 6, **characterised in that** the wall thicknesses (8) in the region of the first connection cross-section (2) for the longitudinal spar are thinner and become thicker wall thicknesses (9) in the region of the second connection cross-section (3) for the bumper support.

8. Energy-absorbing body according to any one of claims 1 to 7, **characterised in that** longitudinal beads (6, 7) are integrally formed.

9. Energy-absorbing body according to any one of claims 1 to 8, **characterised in that** at least one flange (4) is integrally formed at least in the region of one connection cross-section (2, 3).

## Revendications

1. Corps d'absorption d'énergie retenu entre un support de pare-chocs et une zone d'extrémité de longeron d'un châssis de véhicule, le corps d'absorption d'énergie (1) étant réalisé dans la zone d'extrémité d'un longeron à la manière d'un élément d'impact de type pot en forme de corps creux et avec une section transversale se modifiant sur l'extension longitudinale, et comportant une première section transversale de raccordement (2) destinée au longeron, une deuxième section transversale de raccordement (3) destinée au support de pare-chocs, ainsi qu'un tronçon de transition (5) entre les deux sections transversales de raccordement (2, 3), **caractérisé en ce que** le corps d'absorption d'énergie (1) est un élément à haute pression interne dont la forme est obtenue par une transformation à haute pression interne d'un produit semi-fini.

2. Corps d'absorption d'énergie selon la revendication 1, **caractérisé en ce que** le corps d'absorption d'énergie (1) est réalisé sous la forme d'un corps creux tubulaire ouvert des deux côtés et orienté pour l'essentiel coaxialement au longeron, dont les sections transversales de raccordement (2, 3) sont situées au niveau des deux ouvertures d'extrémité de tube.

3. Corps d'absorption d'énergie selon la revendication 1 ou la revendication 2, **caractérisé en ce que** la première section transversale de raccordement (2) destinée au longeron est plus importante que la deuxième section transversale de raccordement (3) destinée au support de pare-chocs.

4. Corps d'absorption d'énergie selon l'une quelconque des revendications 1 à 3, **caractérisé en ce que** les deux sections transversales de raccordement (2, 3) sont des polygones avec chacun un nombre d'angles différent.

5. Corps d'absorption d'énergie selon la revendication 4, **caractérisé en ce que** la première section transversale de raccordement (2) destinée au longeron est quadranglaire en forme de rectangle ou de losange, et en ce que la deuxième section transversale de raccordement (3) destinée au support de pare-chocs est hexagonale.

6. Corps d'absorption d'énergie selon l'une quelconque des revendications 1 à 5, **caractérisé en ce que**, pour le réglage de certains niveaux de forces et d'un comportement prédéterminé au voilement et/ou au flambage, les épaisseurs de paroi (8, 9) varient sur la longueur.

7. Corps d'absorption d'énergie selon la revendication 6, **caractérisé en ce que** les épaisseurs de paroi (8) sont plus minces dans la zone de la première section transversale de raccordement (2) destinée au longeron, et en ce qu'elles se transforment en épaisseurs de paroi (9) plus grandes dans la zone de la deuxième section transversale de raccordement (3) destinée au support de pare-chocs.

8. Corps d'absorption d'énergie selon l'une quelconque des revendications 1 à 7, **caractérisé en ce que** des moulures longitudinales (6, 7) y sont formées.

9. Corps d'absorption d'énergie selon l'une quelconque des revendications 1 à 8, **caractérisé en ce qu'**il est formé au moins une bride (4), au moins dans la zone d'une section transversale de raccordement (2, 3).
